# EUROPÄISCHE PATENTANMELDUNG

(11) **EP 3 184 593 A1**
(43) Veröffentlichungstag der Anmeldung: **28.06.2017**
(21) Anmeldenummer: 16002496.4
(22) Anmeldetag: 23.11.2016
(51) Int. Cl.: C09J 5/00, C09J 7/00, C09J 11/04, F16B 11/00

(54) **PARTIKELTEILCHEN AUFWEISENDES KLEBEMITTEL ZUR VERBINDUNG ZWEIER FAHRZEUGTEILE**

(30) Priorität: 22.12.2015 DE 102015016702
(71) Anmelder: MAN Truck & Bus AG, 80995 München (DE)
(72) Erfinder: Burkhardt, Wolfgang, 91522 Ansbach (DE); Rosner, Alexander, 90408 Nürnberg (DE)
(74) Vertreter: v. Bezold & Partner Patentanwälte - PartG mbB

(57) **Zusammenfassung**

Die Erfindung betrifft ein Fahrzeugbauteil (1), insbesondere Motorenteil, mit zumindest einem Anbauteil (2), wobei das Fahrzeugbauteil (1) und das Anbauteil (2) mittels eines Klebemittels (3) miteinander verbunden sind und in das Klebemittel (3) Partikelteilchen (4) eingebracht sind.

## Beschreibung

Die Erfindung betrifft ein Fahrzeugbauteil mit einem daran angebrachten Anbauteil. Das Fahrzeugbauteil ist insbesondere eine Welle, wohingegen das Anbauteil vorzugsweise ein Nocken oder ein Zahnrad ist. Ebenso kann das Fahrzeugbauteil z. B. ein Motorengehäuse sein, wohingegen das Anbauteil insbesondere ein Motorenträger sein kann.

Gemäß Stand der Technik werden Flansche, Nocken oder Zahnräder üblicherweise mittels einer Kraftschlussverbindung auf die zugehörige Welle aufgebracht, so dass zwischen der Welle und dem Flansch, den Nocken oder den Zahnrädern Schubkräfte (z. B. aus Drehmomenten) übertragen werden können. Die Höhe der zwischen der Welle und den Nocken oder den Zahnrädern übertragbaren Schubkräfte wird maßgeblich durch die Kraftschlussverbindung bestimmt, insbesondere durch den von der Kraftschlussverbindung erzeugten mechanischen Reibwert.

Eine Aufgabe der Erfindung ist es, eine alternative und/oder höher beanspruchbare, zweckmäßig auf Schub beanspruchte Verbindung zwischen einem Fahrzeugbauteil und einem Anbauteil zu schaffen.

Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Fahrzeugbauteil, insbesondere ein Motorenteil (z. B. eine Welle, ein Motorengehäuse etc.), mit zumindest einem Anbauteil, wobei das Fahrzeugbauteil und das Anbauteil in einem, vorzugsweise auf Schub beanspruchbaren, Verklebungsbereich mittels eines Klebemittels (z. B. Klebstoff) miteinander verbunden sind. Das Klebemittel zeichnet sich insbesondere dadurch aus, dass in das Klebemittel Partikelteilchen eingebracht sind, so dass vorzugsweise das Klebemittel eine Stoffschlussverbindung bewirkt und/oder die Partikelteilchen zwischen Fahrzeugbauteil und-Anbauteil reibwertsteigernd wirken.

Durch die in das Klebemittel eingebrachten Partikelteilchen kann insbesondere eine Erhöhung der Schubfestigkeit erzielt werden, was zweckmäßig zu einer stärkeren Verbindung zwischen dem Fahrzeugbauteil und dem Anbauteil führt.

Das Klebemittel weist eine Adhäsionsfestigkeit auf. Die Adhäsionsfestigkeit beschreibt insbesondere die Festigkeit der Verbindung des Klebemittels mit den Werkstoffen der zu verbindenden Bauteile, also insbesondere des Fahrzeugbauteils und des Anbauteils.

Das Klebemittel weist eine Kohäsionsfestigkeit auf. Die Kohäsionsfestigkeit beschreibt insbesondere die Festigkeit des Klebemittels in sich.

Es ist möglich, dass die Kohäsionsfestigkeit des Klebemittels über der Adhäsionsfestigkeit des Klebemittels liegt.

Durch vorzugsweise gleichmäßiges Einbringen von zweckmäßig kleinen, festen Partikelteilchen in das Klebemittel können die Flächen mit Adhäsionswirkung erhöht werden. Es ist eine vorzugsweise möglichst gleichmäßige Verteilung der Partikelteilchen im Klebemittel anzustreben.

Die Festigkeit der Partikelteilchen liegt vorzugsweise über der Festigkeit des Klebemittels.

Es ist möglich, dass im Verklebungsbereich die Partikelteilchen härter sind als der Werkstoff des Fahrzeugbauteils. Alternativ oder ergänzend können im Verklebungsbereich die Partikelteilchen härter sein als der Werkstoff des Anbauteils.

Es ist möglich, dass die Oberfläche der Partikelteilchen zerklüftet und insbesondere unrund ist, um zweckmäßig eine Oberflächenvergrößerung zu erzielen und/oder um einen Verzahnungseffekt mit der Oberfläche des Fahrzeugbauteils und/oder des Anbauteils zu ermöglichen.

Es ist möglich, dass die Oberfläche des Fahrzeugbauteils und/oder die Oberfläche des Anbauteils z. B. durch eine Oberflächenbearbeitung zerklüftet und/oder texturiert und somit insbesondere uneben ist, um zweckmäßig eine Oberflächenvergrößerung zu erzielen und/oder um einen Verzahnungseffekt mit den Partikelteichen zu ermöglichen.

In der Ausführungsform, bei der die Oberfläche der Partikelteilchen zerklüftet ausgeformt ist und die Oberfläche des Fahrzeugbauteils und/oder die Oberfläche des Anbauteils zerklüftet/texturiert ausgeformt ist, kann zweckmäßig ein Verzahnungseffekt zwischen den Partikelteilchen einerseits und dem Fahrzeugbauteil und/oder dem Anbauteil andererseits erzielt werden.

Die zerklüfteten Oberflächen der Partikelteilchen ermöglichen vorzugsweise ebenfalls eine Verlängerung eines potentiellen Versagensrisses (z. B. Rissfläche), was insbesondere zu einer Festigkeitssteigerung der Klebeverbindung zwischen dem Fahrzeugbauteil und dem Anbauteil führt.

Es ist möglich, dass i) die Partikelteilchen mit der Oberfläche des Fahrzeugbauteils und/oder der Oberfläche des Anbauteils in Kontakt stehen, ii) mit der Oberfläche des Fahrzeugbauteils und/oder der Oberfläche des Anbauteils verzahnt sind, und/oder iii) in die Oberfläche des Fahrzeugbauteils und/oder die Oberfläche des Anbauteils eingearbeitet sind, z. B. durch Aufbringen einer statischen Normalkraft oder einer dynamischen Bewegung beim Fügen des Fahrzeugbauteils und des Anbauteils.

Es ist möglich, dass die Dicke des Verklebungsbereichs zwischen dem Fahrzeugbauteil und dem Anbauteil und die Abmessung der Partikelteilchen so ausgeführt sind, dass einzelne Partikelteilchen einerseits mit dem Fahrzeugbauteil und andererseits zugleich mit dem Anbauteil in Kontakt stehen und/oder verzahnt sind.

Es ist ebenfalls möglich, dass die Dicke des Verklebungsbereichs zwischen dem Fahrzeugbauteil und dem Anbauteil und die Abmessung der Partikelteilchen so ausgeführt sind, dass einzelne Partikelteilchen nur mit dem Fahrzeugbauteil in Kontakt stehen und/oder verzahnt sind, aber zweckmäßig von dem Anbauteil beabstandet sind, während andere Partikelteilchen nur mit dem Anbauteil in Kontakt stehen und/oder verzahnt sind, aber zweckmäßig von dem Fahrzeugbauteil beabstandet sind.

Es ist möglich, dass die Partikelteilchen einen Durchmesser, eine Länge und/oder Breite von größer oder gleich 0,01 mm und/oder kleiner oder gleich 0,1 mm aufweisen.

Das Klebemittel ist vorzugsweise Teil einer Reibschlussverbindung.

Der Verklebungsbereich kann eine Dicke von vorzugsweise kleiner oder der gleich 0,05 mm aufweisen, z. B. als sogenannte Null-Spalt-Klebung ausgeführt sein, oder eine Dicke von größer oder gleich 0,05 mm aufweisen. Die Dicke entspricht vorzugsweise einer mittleren Dicke, sofern die Oberfläche des Fahrzeugbauteils und/oder des Anbauteils texturiert bzw. zerklüftet ausgebildet ist, z. B. dem in den angehängten Figuren definierten Nennabstand (Zeichnungsmaß ohne Berücksichtigung der Toleranz).

Das Fahrzeugbauteil ist vorzugsweise eine Welle und das Anbauteil kann zweckmäßig ein Zahnrad, ein Flansch oder ein Nocken sein.

Der Flansch ist vorzugsweise axial an einem Wellenende ausgebildet. Der Nocken ist vorzugsweise entlang und/oder radial an einer Welle ausgebildet.

Die Welle kann z. B. als Nockenwelle oder Kurbelwelle ausgeführt sein.

Das Fahrzeugbauteil kann auch z. B. ein Motorengehäuse sein und das Anbauteil kann zweckmäßig einen Motorenträger umfassen.

Das Klebemittel ist vorzugsweise Öl-resistent und ist im Betriebszustand des Fahrzeugbauteils und/oder des Anbauteils Öl ausgesetzt, z. B. mit Öl benetzt oder sogar in Öl getränkt. Das Öl kann z. B. Motoren- und/oder Getriebeöl sein.

Als Partikelteilchen können z. B. Carbide verwendet werden.

Der Verklebungsbereich ist zweckmäßig eine Klebefuge, z. B. eine Klebeschicht.

Zu erwähnen ist, dass bei einem potentiellen Versagen der Klebeverbindung zwischen dem Fahrzeugbauteil und dem Anbauteil durch Kohäsionsversagen mittels der Partikelteilchen ein Riss um die Partikelteilchen herum geleitet werden kann, weil deren Festigkeit zweckmäßig über der Festigkeit des Klebemittels liegt. Die kritische Fläche der Klebeverbindung, insbesondere vergleichbar mit der potentiellen Rissfläche, kann dadurch erhöht werden. Außerdem kann die höhere Adhäsionswirkung des Klebemittels an den Partikelteilchen positiv zum Tragen kommen und somit festigkeitssteigernd wirken.

Die Erfindung ist nicht auf eine Anordnung aus einem Fahrzeugbauteil und einem Anbauteil beschränkt, sondern umfasst auch ein Fahrzeug, vorzugsweise ein Kraftfahrzeug, insbesondere ein Nutzfahrzeug, z. B. einen Omnibus oder einen Lastkraftwagen, mit einem Fahrzeugbauteil wie hierin offenbart.

Die vorstehend beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Darstellung eines Fahrzeugbauteils mit einem Anbauteil und einer Verklebung gemäß einer Ausführungsform der Erfindung, und
- Figur 2: zeigt eine schematische Darstellung eines Fahrzeugbauteils mit einem Anbauteil und einer Verklebung gemäß einer anderen Ausführungsform der Erfindung.

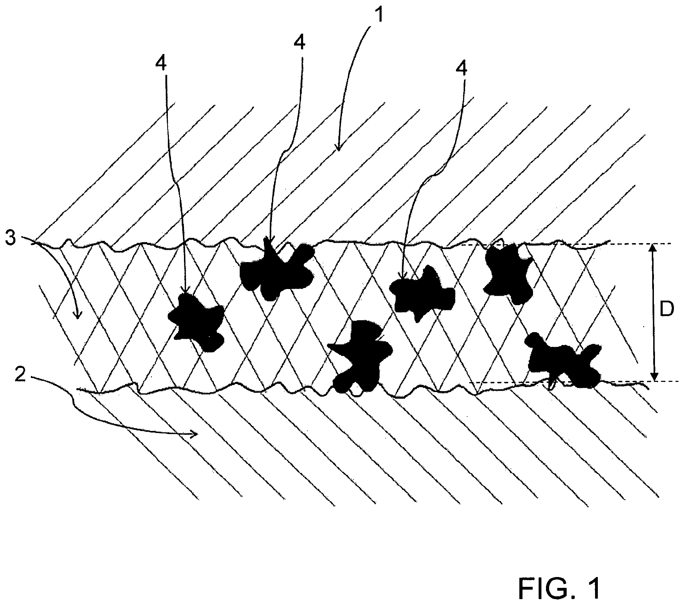

Figur 1 zeigt eine schematische Ansicht eines Abschnitts eines Fahrzeugbauteils 1 und eines Abschnitts eines daran angebrachten Anbauteils 2 gemäß einer Ausführungsform der Erfindung. Das Fahrzeugbauteil 1 kann z. B. eine Welle sein, während das Anbauteil 2 dann z. B. ein Zahnrad, ein Flansch oder ein Nocken sein kann. Es ist allerdings ebenfalls möglich, dass das Fahrzeugbauteil 1 z. B. ein Motorengehäuse ist, während das Anbauteil 2 dann ein Motorenträger sein kann.

Das Fahrzeugbauteil 1 und das Anbauteil 2 sind in einem insbesondere auf Schub beanspruchten Verklebungsbereich (z. B. Klebefuge) mittels eines Klebemittels (z. B. Klebstoff) 3 miteinander verbunden. In das Klebemittel 3 sind Partikelteilchen 4 eingebracht, deren Festigkeit über der Festigkeit des Klebemittels 3 liegt. Außerdem sind die Partikelteilchen 4 härter als der Werkstoff des Fahrzeugbauteils 1 und der Werkstoff des Anbauteils 2. Die Kohäsionsfestigkeit des Klebemittels 3 liegt zweckmäßig über der Adhäsionsfestigkeit des Klebemittels 3.

Die Dicke D des Verklebungsbereichs, also insbesondere die Dicke D der Klebefuge, beträgt in der in der Figur 1 gezeigten Ausführungsform mehr als 0,05 mm. Bei der in Figur 1 gezeigten Ausführungsform sind die Dicke D des Verklebungsbereichs und die Abmessungen der Partikelteilchen 4 so ausgeführt, dass einzelne Partikelteilchen 4 nur mit dem Fahrzeugbauteil 1 in Kontakt stehen, während diese von dem Anbauteil 2 beabstandet sind, wobei andere Partikelteilchen 4 nur mit dem Anbauteil 2 in Kontakt stehen, während diese von dem Fahrzeugbauteil 1 beabstandet sind.

Aus Figur 1 wird ersichtlich, dass die Oberfläche der Partikelteilchen 4 zerklüftet ist, so dass eine Oberflächenvergrößerung erzielt wird. Ebenfalls sind die Oberflächen des Fahrzeugbauteils 1 und des Anbauteils 2 zerklüftet, können aber auch zweckmäßig texturiert (z. B. strukturiert) ausgeführt sein, so dass eine Oberflächenvergrößerung erzielt wird. Dadurch, dass die Oberflächen der Partikelteilchen 4 einerseits und die Oberflächen des Fahrzeugbauteils 1 und des Anbauteils 2 andererseits zerklüftet ausgeführt sind, kann zwischen den Partikelteichen 4 einerseits und dem Fahrzeugbauteil 1 und dem Anbauteil 2 andererseits ein reibwerterhöhender Verzahnungseffekt bewirkt werden. Die zerklüfteten Partikelteilchen 4 führen ferner zu einer Verlängerung eines potentiellen Versagensrisses, z. B. einer Rissfläche, durch die Klebeverbindung, was insbesondere in einer Festigkeitssteigerung der Klebeverbindung zwischen dem Fahrzeugbauteil 1 und dem Anbauteil 2 resultiert.

Durch vorzugsweise gleichmäßiges Einbringen kleiner, fester Partikelteilchen 4 in das Klebemittel 3 können die Flächen mit Adhäsionswirkung erhöht werden. Die Partikelteilchen 4 sind möglichst gleichmäßig im Klebstoff 3 verteilt anzuordnen. Die Partikelteilchen 4 umfassen zweckmäßig eine möglichst stark zerklüftete und dadurch große Oberfläche. Für ein potentielles Versagen der Klebeverbindung zwischen dem Fahrzeugbauteil 1 und dem Anbauteil 2 durch Kohäsionsversagen kann durch die eingebrachten Partikelteilchen 4 ein potentieller Riss um die Partikelteilchen 4 herum geleitet werden, da die Festigkeit der Partikelteilchen 4 über der Festigkeit des Klebemittels 3 liegt. Die kritische Fläche der Klebung, vergleichbar mit der potentiellen Rissfläche, kann dadurch erhöht werden. Zudem kommt die höhere Adhäsionswirkung des Klebemittels 3 an den Partikelteilchen 4 positiv zur Geltung, also festigkeitssteigernd.

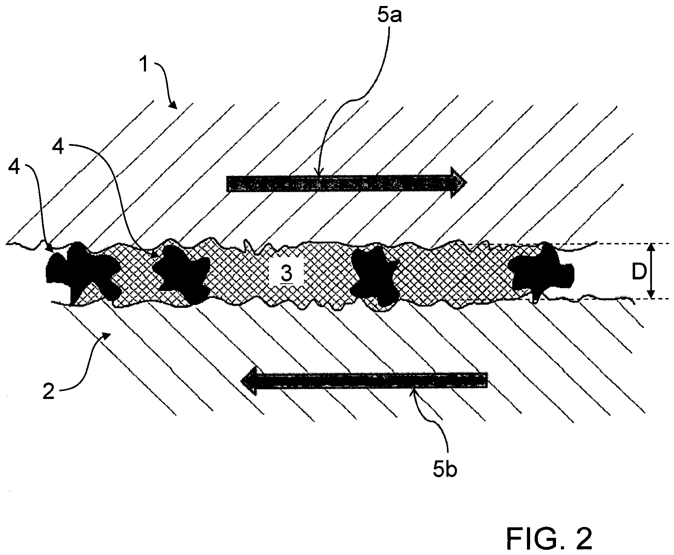

Figur 2 zeigt eine schematische Ansicht eines Abschnitts eines Fahrzeugbauteils 1 und eines Abschnitts eines daran angebrachten Anbauteils 2 gemäß einer anderen Ausführungsform der Erfindung. Die in den Figuren 1 und 2 gezeigten Ausführungsformen stimmen teilweise überein, so dass für ähnliche oder identische Teile die gleichen Bezugszeichen verwendet werden und zu deren Erläuterung auch auf die Beschreibung der anderen Ausführungsform verwiesen wird, um Wiederholungen zu vermeiden.

Bei der in Figur 2 gezeigten Ausführungsform beträgt die Dicke D des Verklebungsbereichs, also insbesondere die Dicke D der Klebefuge, weniger als 0,05 mm. Die Verklebung kann als sogenannte Null-Spalt-Klebung ausgeführt sein.

Die Dicke D des Verklebungsbereichs und die Abmessung der Partikelteilchen 4 sind so ausgeführt, dass einzelne Partikelteilchen 4 einerseits mit dem Fahrzeugbauteil 1 und andererseits zugleich mit dem Anbauteil 2 vorzugsweise verzahnend in Kontakt stehen. Werden harte Partikelteilchen 4, z. B. Carbide, verwendet, so kann die Belastbarkeit des Verklebungsbereichs auf Schubbelastung, die schematisch durch die Bezugszeichen 5a (Schubkraft 1) und 5b (Schubkraft 2) dargestellt ist, erhöht werden. Dabei können die Partikelteilchen 4 mit Kontakt zu den zu verklebenden Teilen, also dem Fahrzeugbauteil 1 und dem Anbauteil 2, reibwerterhöhend wirken.

Eine besondere Möglichkeit zur Erhöhung der Adhäsionsfestigkeit kann durch Eingraben harter Partikelteilchen 4 in den (Grund-) Werkstoff des Fahrzeugbauteils 1 und/oder des Anbauteils 2 erzielt werden. Dies kann z. B. beim Fügen der zu verklebenden Teile, also des Fahrzeugbauteils 1 und des Anbauteils 2, mittels Aufbringens einer statischen Normalkraft oder einer dynamischen Bewegung der zu verklebenden Bauteiloberflächen entlang des Verklebungsbereichs erfolgen.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Fahrzeugbauteil, insbesondere Welle oder Motorengehäuse
- 2: Anbauteil, insbesondere Zahnrad, Nocken oder Motorenträger
- 3: Klebemittel, insbesondere Klebstoff
- 4: Partikelteilchen
- 5a: Schubkraft 1
- 5b: Schubkraft 2
- D: Dicke des Verklebungsbereichs, insbesondere der Klebefuge

## Patentansprüche

1. Fahrzeugbauteil (1), insbesondere Motorenteil, mit zumindest einem Anbauteil (2), wobei das Fahrzeugbauteil (1) und das Anbauteil (2) mittels eines Klebemittels (3) miteinander verbunden sind und in das Klebemittel (3) Partikelteilchen (4) eingebracht sind.

2. Fahrzeugbauteil (1) nach Anspruch 1, wobei das Klebemittel (3) eine Adhäsionsfestigkeit und eine Kohäsionsfestigkeit aufweist und die Kohäsionsfestigkeit über der Adhäsionsfestigkeit liegt.

3. Fahrzeugbauteil (1) nach Anspruch 1 oder 2, wobei die Festigkeit der Partikelteilchen (4) über der Festigkeit des Klebemittels (3) liegt.

4. Fahrzeugbauteil (1) nach einem der vorhergehenden Ansprüche, wobei im Verklebungsbereich die Partikelteilchen (4) härter sind als der Werkstoff des Fahrzeugbauteils (1).

5. Fahrzeugbauteil (1) nach einem der vorhergehenden Ansprüche, wobei im Verklebungsbereich die Partikelteilchen (4) härter sind als der Werkstoff des Anbauteils (2).

6. Fahrzeugbauteil (1) nach einem der vorhergehenden Ansprüche, wobei die Oberfläche der Partikelteilchen (4) zerklüftet ist.

7. Fahrzeugbauteil (1) nach einem der vorhergehenden Ansprüche, wobei die Oberfläche des Fahrzeugbauteils (1) und/oder die Oberfläche des Anbauteils (2) zerklüftet und/oder texturiert ist.

8. Fahrzeugbauteil (1) nach einem der vorhergehenden Ansprüche, wobei die Partikelteilchen (4) mit der Oberfläche des Fahrzeugbauteils (1) und/oder des Anbauteils (2) in Kontakt stehen, damit verzahnt sind und/oder darin eingearbeitet sind.

9. Fahrzeugbauteil (1) nach einem der vorhergehenden Ansprüche, wobei die Dicke (D) des Verklebungsbereichs und die Abmessung der Partikelteilchen (4) so ausgeführt sind, dass einzelne Partikelteilchen (4) einerseits mit dem Fahrzeugbauteil (1) und andererseits mit dem Anbauteil (2) in Kontakt stehen und/oder verzahnt sind.

10. Fahrzeugbauteil (1) nach einem der vorhergehenden Ansprüche, wobei die Dicke (D) des Verklebungsbereichs und die Abmessung der Partikelteilchen (4) so ausgeführt sind, dass einzelne Partikelteilchen (4) nur mit dem Fahrzeugbauteil (1) in Kontakt stehen und/oder verzahnt sind, wobei andere Partikelteilchen nur mit dem Anbauteil (2) in Kontakt stehen und/oder verzahnt sind.

11. Fahrzeugbauteil (1) nach einem der vorhergehenden Ansprüche, wobei der Durchmesser, die Breite und/oder Länge der Partikelteilchen (4) größer ist als 0,01 mm und/oder kleiner ist als 0,1 mm.

12. Fahrzeugbauteil (1) nach einem der vorhergehenden Ansprüche, wobei das Klebemittel Teil einer Reibschlussverbindung ist.

13. Fahrzeugbauteil (1) nach einem der vorhergehenden Ansprüche, wobei der Verklebungsbereich eine Dicke (D) von kleiner oder gleich 0,05 mm oder größer oder gleich 0,05 mm aufweist.

14. Fahrzeugbauteil (1) nach einem der vorhergehenden Ansprüche, wobei das Fahrzeugbauteil (1) eine Welle ist und das Anbauteil (2) ein Zahnrad, einen Nocken oder einen Flansch umfasst.

15. Fahrzeugbauteil (1) nach einem der vorhergehenden Ansprüche, wobei das Fahrzeugbauteil (1) ein Motorengehäuse ist und das Anbauteil (2) einen Motorenträger umfasst.

16. Fahrzeugbauteil (1) nach einem der vorhergehenden Ansprüche, wobei das Klebemittel Öl-resistent ist und insbesondere im Betriebszustand Öl ausgesetzt ist.

17. Fahrzeug, vorzugsweise Kraftfahrzeug, mit einem Fahrzeugbauteil (1) nach einem der vorhergehenden Ansprüche.
